# EUROPÄISCHE PATENTSCHRIFT

(11) **EP 0 475 543 B1**
(45) Veröffentlichungstag und Bekanntmachung des Hinweises auf die Patenterteilung: **11.10.1995**
(21) Anmeldenummer: 91250209.3
(22) Anmeldetag: 26.07.1991
(51) Int. Cl.: G01C 9/12, F16C 39/06

(54) **Pendellager für ein Präzisionsmesspendel**
Pendulum bearing for a precision measuring pendulum
Palier à pendule pour une pendule de mesure à précision

(30) Priorität: 08.09.1990 DE 4028858
(43) Veröffentlichungstag der Anmeldung: 18.03.1992
(73) Patentinhaber: ARNOLD & RICHTER CINE TECHNIK GMBH & CO. BETRIEBS KG., D-80799 München (DE)
(72) Erfinder: Rauscher, Erich, W-8000 München 50 (DE); Jacoby, Hans Dieter, Dr., W-8011 Vaterstetten (DE); Srb, Karel, W-8000 München (DE)
(74) Vertreter: Maikowski, Michael, Dipl.-Ing. Dr.

(56) Entgegenhaltungen:
- EP-A- 0 025 954
- CH-A- 359 334
- CH-A- 412 504
- CH-A- 669 996
- DE-A- 3 437 937
- US-A- 3 614 181

## Beschreibung

Die Erfindung bezieht sich auf ein Pendellager für ein in einem Gehäuse gelagertes Präzisionsmeßpendel nach dem ersten Teil des Anspruchs 1.

Präzisionsmeßpendel werden zur Neigungsmessung bzw. zur Messung der vertikalen Lage von Gegenständen verwendet, wobei der Neigungswinkel sehr klein und die geforderte Genauigkeit bei der Neigungsmessung sehr groß sein kann. Präzisionsmeßpendel finden unter anderem Verwendung bei der Achsvermessung von landgebundenen Fahrzeugen, bei der die Lage der Räder zueinander sowie die vertikale Lage der Räder durch den Ausschlag eines Pendels gegenüber einem Gehäuse ermittelt wird, welches über eine Vorrichtung mit den Rädern verbunden ist.

Ein derartiges Präzisionsmeßpendel muß beispielsweise Ausschläge um die eigene Pendeldrehachse um ± 11° erlauben. Dabei soll es ferner um einen Winkel ± 15° quer zur Achse kippbar sein, ohne daß die Meßgenauigkeit negativ beeinflußt wird. Es wird dabei in vielen Fällen eine Meßgenauigkeit von 20 Winkelsekunden gefordert.

Aus der CH-A-412 504 ist eine reibungsarme Lagerung von Pendelsystemen in optischen Meßinstrumenten bekannt, welche einen Hufeisenmagneten aufweist, zwischen dessen verjüngten Polschuhen die Welle des Pendelsystems aus Weicheisen magnetisch in der Lage gehalten wird. Das Gewicht der Welle und des Pendels wird durch sich von den Polen des Hufeisenmagneten aus parallel zur Welle erstreckenden Hilfspolen aufgehoben. Zwischen der Welle und den sich verjüngenden Polen des Hufeisenmagneten sind Saphirkappen angeordnet.

Aus der US-A-3 614 181 ist ein Magnetlager bekannt, welches Radial- und Axiallasten aufnimmt. Dieses Lager weist zwei einander gegenüberliegende, am Gehäuse angeordnete Ringmagneten auf. Zwischen diesen Ringmagneten erstreckt sich eine die Last aufnehmende Achse, an deren Enden Stabmagnete angeordnet sind, die sich in die Ringmagnete hineinerstrekken. Zu beiden Seiten der Last sind an der Welle Ringmagneten angeordnet, die sich koaxial in am Gehäuse gelagerte Ringmagneten hineinerstrecken. Bei diesen Magnetlagersystem werden von den an den Enden der Achse angeordneten Stabmagneten und den mit diesen zusammenwirkenden am Gehäuse befestigten Ringmagneten, in die sich diese Stabmagnete hineinerstreckten, die Axiallasten aufgenommen. Die Radiallasten der Welle werden von den zu beiden Seiten der Last angeordneten konzentrischen Ringmagnetsystemen aufgenommen. Bei diesem Magnetlager sind zwei voneinander getrennte Magnetsysteme zur Aufnahme der axialen und radialen Lasten vorhanden.

Die DE 34 37 937 A1 beschreibt ein Magnetlager als Führung einer senkrecht angeordneten Welle eines rheologischen Meßsystems, bei dem an der Welle ein Meßsystem angeordnet ist, welches mit einem am Gehäuse angeordneten, die Welle koaxial umgebenden Magnetsystem zusammenwirkt, bei dem Ringmagnete mit zur Rotationsachse geneigter Stirnfläche vorgesehen sind, welche mit axialem Abstand ihnen zugeordneten Magnetelementen gegenüberliegen. Ein gattungsgleiches magnetisches Schiebelager wird in der EP-A-0 025 954 beschrieben.

Die CH-A-359 334 beschreibt eine magnetisch gelagerte, bezüglich Drehung um ihre Längsachse in indifferentem Gleichgewicht befindliche Systemachse, die sich zwischen den Polschuhen eines Hufeisenmagneten erstreckt.

Aufgabe der vorliegenden Erfindung ist es, ein Pendellager für ein Präzisionsmeßpendel zu schaffen, mit dem selbst unter rauhen Betriebsbedingungen große Meßgenauigkeiten bei Neigungsmessungen erzielt werden.

Diese Aufgabe wird erfindungsgemäß dadurch gelöst, daß die Magnetelemente als magnetische oder den Magnetfluß leitende Elemente ausgebildet sind, und daß zur sowohl axialen als auch radialen Fixierung der Pendelachse die Stirnflächenpole der Elemente den pendelseitigen Stirnflächen der Ringmagnete mit axialem Abstand gegenüberliegen, wobei jeweils ein Lagerringmagnet und das ihm gegenüberliegende Element als Magnetschwebelager derart zusammenwirken, daß sich in Richtung der Pendeldrehachse erstreckende, um diese rotationssymmetrische, von gleichnamigen oder ungleichnamigen Polen erzeugte und sich radial zur Pendeldrehachse erstrekkende, um diese radialsymmetrische, von ungleichnamigen Polen erzeugte Magnetfelder ausbilden.

Die erfindungsgemäße Lösung ermöglicht die Herstellung äußerst kleiner, robuster und kostengünstiger Lagerungen für ein Präzisionsmeßpendel, das selbst unter rauhen Betriebsbedingungen große Meßgenauigkeiten bei der Neigungsmessung erzielt.

Bei der erfindungsgemäßen Lösung ist jedes Magnetschwebelager derart ausgebildet, daß in axialer Richtung, d.h. in Richtung der Pendeldrehachse, anziehende Kräfte ungleichnamiger Pole bzw. abstoßende Kräfte gleichnamiger Pole erzeugt werden. Dabei sind die Lagerelemente als Lagerringmagnete ausgebildet, die sowohl eine axiale Halterung und dabei axiale Festlegung der Pendelschwingungsebene gegenüber dem Gehäuse als auch eine radiale Zentrierung des Pendels gegenüber dem Gehäuse bzw. gegenüber einer Pendeldrehachse ermöglichen.

Als Teil des Magnetschwebelagers sind Lagerringmagnete vorgesehen, während die Gegenlagerelemente durch magnetische oder den Magnetfluß leitende Bauelemente gebildet werden, so daß sowohl eine axiale Fixierung der Pendelschwingungsebene gegenüber dem Gehäuse als auch eine radiale Fixierung der Pendeldrehachse ermöglicht wird. Die Lagerringmagnete wirken mit den magnetischen oder den Magnetfluß leitenden Bauelementen derart zusammen, daß diese in Richtung der Pendeldrehachse, d.h. axial sich ersteckende, um die Pendeldrehachse rotationssymmetrisch verlaufende Magnetfelder gleicher oder entgegengesetzter Pole erzeugen. Die Ausbildung dieser Magnetfelder ist derart, daß zwischen den Lagerelementen in axialer Richtung zur Pendelschwingungsebene hingerichtete oder von dieser fortgerichtete magnetische Kräfte derart erzeugt werden, daß die Pendelschwingungsebene gegenüber dem Gehäuse fixiert wird.

Dadurch, daß die Konfiguration und Anordnung der magnetischen bzw. den Magnefluß leitenden Bauelemente gegenüber den Lagerringmagneten radial zur Pendeldrehachse sich erstreckende und um diese radial symmetrisch ungleichnamige Magnetfelder erzeugen, wird in eindeutiger Weise die Pendeldrehachse gegenüber dem Gehäuse fixiert.

In einer vorteilhaften Ausgestaltung der erfindungsgemäßen Lösung sind die Lagerringmagnete mit je einem Weicheisenkern verbunden, die zur Halterung der Lagerringmagnete dienen und gleichzeitig die Richtung des Magnetflusses zur Optimierung des Magnetschwebelagers beeinflussen.

Nach einer weiteren vorteilhaften Ausgestaltung der Erfindung wird der Freiheitsgrad des Pendels in Richtung der Pendeldrehachse gefesselt, insbesondere mechanisch begrenzt, so daß das Pendellager zusätzlich stabilisiert wird.

Als Stabilisierungsmittel wird vorzugsweise zwischen dem Pendel und dem Gehäuse des Präzisionsmeßpendels in der Pendeldrehachse ein Spannband angeordnet, das wahlweise aus einem Draht, einer Faser oder dergleichen bestehen kann.

Um in eindeutiger Weise instabile Gleichgewichtslagen der Pendelschwingungsebene im Gehäuse auszuschalten, sind die Magnetschwebelager magnetisch in axialer Richtung so einstellbar, daß auf das Spannband stets eine Zugkraft ausgeübt wird. Eine derartige Einstellung kann in vorteilhafter Weise durch unterschiedliche Bemessung der Polabstände der magnetischen Bauteile im Magnetschwebelager erfolgen.

Werden in dem Pendellager Bauelemente verwendet, die den Magnetfluß leiten, insbesondere Weicheisenkerne, so werden diese vorzugsweise derart ausgebildet, daß eine kreiszylindrisch-koaxiale Polkonfiguration entsteht. Die axialen zylindrischen Stirnflächenpole stehen dabei den Stirnflächen der Ringmagnete mit Abstand gegenüber und koaxiale Pole erstrecken sich koaxial zu den Ringmagneten.

In einer bevorzugten Ausführungsform sind diese Weicheisenkerne koaxial in der Pendeldrehachse angeordnete Kreiszylinderschalen, an deren Stirnflächen den Stirnflächen der Ringmagnete mit Abstand gegenüberliegende, zueinander koaxiale kantenscharfe Ringe ausgebildet sind. Dies bedeutet, daß beim Einbau des Pendellagers die beiden kantenscharfen Ringe der Kreiszylinderschalen in einer gemeinsamen Zylinderfläche liegen. Mit dieser Ausgestaltung werden örtlich konzentrierte Magnetfelder erzeugt, die rotationssymmetrisch um die Pendeldrehachse koaxial zueinander verlaufen und somit die Fixierung gegenüber den Lagerringmagneten optimieren.

Von den Böden der Kreiszylinderschalen erstrecken sich vorzugsweise koaxiale Polzapfen soweit, daß sie optimal mit den Feldern in den Lagerringmagneten zusammenwirken können. Dieses Zusammenwirken der Polzapfen mit den Lagerringmagneten wird durch Weicheisenkerne in den Lagerringmagneten noch zusätzlich verbessert.

In einer der Kreiszylinderschalen ist als Polzapfen mit Vorteil ein Abstandshalter eingesetzt, an dem das Spannband befestigt werden kann.

Wenn in Richtung der Pendeldrehachse zwischen den Lagerelementen abstossende Kräfte erzeugt werden sollen, sind erfindungsgemäß die magnetischen Bauelemente als in der Drehachse angordnete Stabmagnete ausgebildet. Die Anordung und Konfiguration dieser Stabmagnete ist dabei derart, daß deren Radien kleiner als die Ringinnenradien der Lagerringmagnete sind. Durch die Anordnung der Stirnflächen dieser Stabmagnete in geringem axialen Abstand von den Stirnflächen der Lagerringmagnete und dadurch, daß die Polaritäten der Stirnflächen der Stab- und Lagerringmagnete gleich sind, wird sowohl eine axiale als auch eine radiale Fixierung erzielt.

Um eine kompakte Bauweise des Präzisionsmeßpendels zu ermöglichen, sind mit Vorteil die Stabmagnete als Kreiszylinderscheiben ausgebildet. Ein einfacher Aufbau wird dadurch erreicht, daß die Lagerring- und Stabmagnete Permanentmagnete sind.

Vorteilhafterweise kann bei der erfindungsgemäßen Lösung die magnetische Lagerung durch eine Konzentration des magnetischen Flusses über die Weicheisenkerne verbessert werden. Zu diesem Zweck kann beispielsweise die Magnetscheibe mit einem Ring mit Boden und der Ring mit einem Kern versehen werden, der ebenfalls einen Boden aufweist. Auf diese Weise wird ein Magnetfeld mit im wesentlichen in torischer Richtung liegenden Feldlinien mit relativ kleinem Luftspalt erzeugt. Dadurch lassen sich die Kräfte erhöhen und deutlich gröbere Toleranzen erzielen.

Eine weitere vorteilhafte Lagerkonfiguration besteht darin, die Lagerringmagnete im stationären Gehäuse zu montieren. Der axiale Abstand der Lagerelemente kann beispielsweise einige Zehntel Millimeter betragen. Die Pole dieser Lagermagneten bestimmen dann die Drehachse des Pendels.

In diesen magnetischen Schwebelagern treten kippende Kräfte nicht auf. Durch das Spannband werden im Betrieb auftretende Stoßbelastungen aufgefangen. Es hat sich gezeigt, daß Stoßbelastungen auch bei relativ kurzen Längen dieses Spannbandes mit geringen Torsionsrückstellmomenten aufgenommen werden können. Durch die Fortschritte auf dem Gebiet der Magnetwerkstoffe ist es möglich, kleinere, robustere und kostengünstigere magnetische Lager herzustellen, wie es in der Literaturstelle "Weinmann: Magnetic Bearings, Manuskript (1976)" beschrieben wird.

Wenn das Pendellager in einem Gehäuse eingebaut ist, sollte beim Lagern des Präzisionsmeßgerätes das Spannband in jeder Lage gespannt sein, damit bei längerer Lagerung abweichend von der Arbeitslange keine Memoryeffekte auftreten. Dies wird in vorteilhafter Weise durch die Ausbildung von Anschlägen im Gehäuse erreicht. Dadurch wird sichergestellt, daß bei auftretenden Stössen die Radialauslenkung nur innerhalb des selbstzentrierenden Bereichs möglich ist.

Um sicherzustellen, daß bei auftretenden Stössen, die in jeder beliebigen Richtung auftreten können, kein Verkanten, Verklemmen oder Verspannen des Pendelkörpers oder Bandlagerung erfolgen kann, wird die Konfiguration der Anschläge so gewählt, daß in jeder beliebigen Lage der Pendelkörper am Gehäuse in einem Winkel anstößt, der immer kleiner als 80° ist.

Diese Festlegung gilt auch für die Bandlagerung. Dabei wird noch zusätzlich sichergestellt, daß die Bewegungsfreiheit des Pendelkörpers in Richtung der Bandausdehnung so groß ist, daß der Pendelkörper zuerst seitlich aufgefangen wird, bevor er sich über dem Bandzug verklemmen kann. Der eingesetzte Abstandshalter stellt zusätzlich sicher, daß beim Stoß die Polabstände der Magnetlager erhalten bleiben und somit das Spannband in Zugrichtung verbleibt.

Anhand von in der Zeichnung dargestellten Ausführungsbeispielen soll der der Erfindung zugrundeliegende Gedanke näher erläutert werden. Es zeigen:
- Figur 1 -: eine schematische Schnittdarstellung eines in einer Meßkamera eingebauten Präzisionsmeßpendels mit Magnetscheiben zur Lagerung des Pendels und
- Figur 2 -: eine schematische Schnittdarstellung eines Präzisionsmeßpendel mit Weicheisenkernen im Magnetschwebelager.

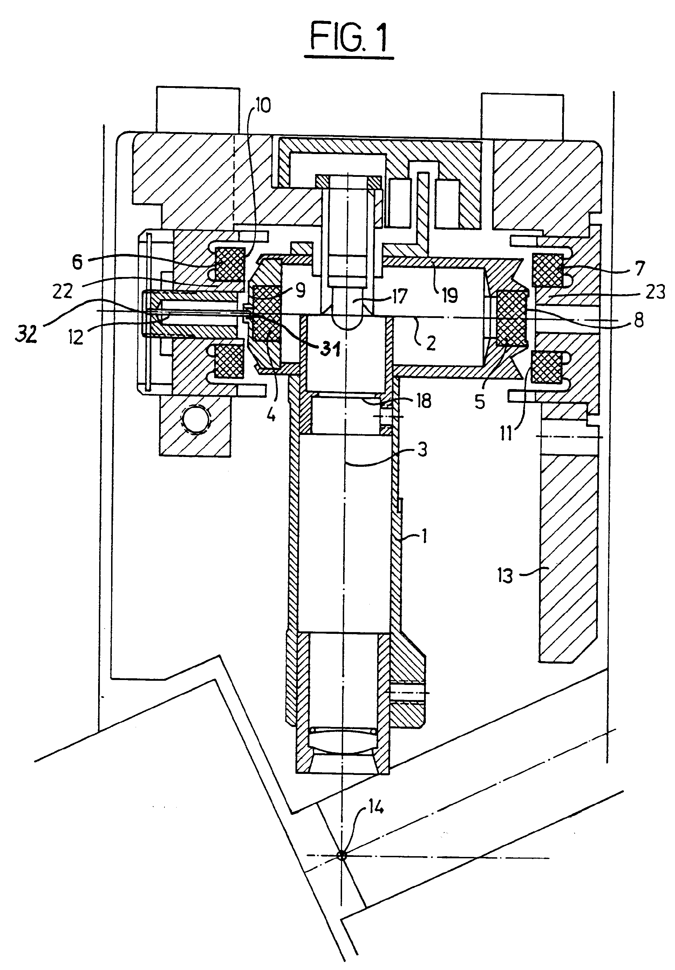

Bei dem in Figur 1 dargestellten Ausführungsbeispiel handelt es sich um eine Meßkamera, in der ein Präzisionsmeßpendel angeordnet ist, dessen Magnetschwebelager in einem Gehäuse 13 der Meßkamera ausgebildet ist. Innerhalb dieses Gehäuses 13 ist ein Pendel 1 in einer Pendelschwingungsebene 3 um eine Pendeldrehachse 2 verschwenkbar gelagert. Der Drehwinkel des Pendels 1 um die Pendeldrehachse 2 innerhalb der Pendelschwingungsebene 3 wird mittels einer CCD-Diodenzelle 14 ermittelt.

Eine im Pendel 1 im Schnittpunkt der Pendeldrehachse 2 mit einer optischen Achse liegende Lichtquelle 17 erzeugt ein Bild eines Spaltes 18 auf der CCD-Diodenzelle 14. Diese CCD-Diodenzelle 14 wird zyklisch abgelesen und durch eine entsprechende Bewertung bei der Auswertung die Lage des Spaltes 18 ermittelt.

Das in der Zeichnung dargestellte magnetische Lager des Pendels 1 weist eine Lagerhülse 19 auf. In der Pendeldrehachse 2 ist an den Stirnseiten der Lagerhülse 19 zu beiden Seiten des Pendels 1 je eine Magnetscheibe 4, 5 angeordnet. Die Magnetscheiben 4, 5, die in diesem Ausführungsbeispiel aus Permanent-Stabmagneten bestehen, liegen mit ihren Polen im Zentrum der Pendeldrehachse 2.

Am Gehäuse 13 sind Weicheisenkerne 22, 23 befestigt, mit denen Ringmagnete 6, 7 verbunden sind, die derart montiert sind, daß ihre Pole in der Pendeldrehachse 2 liegen. Die Weicheisenkerne 22, 23 dienen neben der Halterung der Ringmagnete 6, 7 auch der Ausrichtung des Magnetflusses des Magnetschwebelagers.

Die pendelseitigen Stirnflächen 8, 11 der Ringmagnete 6, 7 sind in axialem Abstand zu den gehäuseseitigen Stirnflächen 8, 9 der Magnetscheiben 4, 5 angeordnet. Die einandergegenüberstehenden Stirnflächen 8 und 11 bzw. 10 und 9 der Magnetbauteile des Magnetschwebelagers weisen gleiche Polarität auf. Durch die geometrische Gestaltung und die Polarität der Magnete werden die Magnetscheiben 4 und 5 gleichzeitig radial zentriert und axial gehalten.

Das vorstehend beschriebene Magnetschwebelager weist unter bestimmten Betriebsbedingungen einen axialen Freiheitsgrad auf, der in dem in Figur 1 dargestellten Ausführungsbeispiel durch ein Spannband 12 festgelegt wird, das in einer pendelseitigen Klemmvorrichtung 31 und einer gehäuseseitigen Klemmvorrichtung 32 auf der einen Seite des Pendels 1 eingespannt ist. Zu diesem Zweck ist eine Hülse in den Weicheisenkern 22 eingesetzt und trägt an seiner gehäuseseitigen Stirnseite die gehäuseseitige Klemmvorrichtung 32 zum Einspannen des Spannbandes 12.

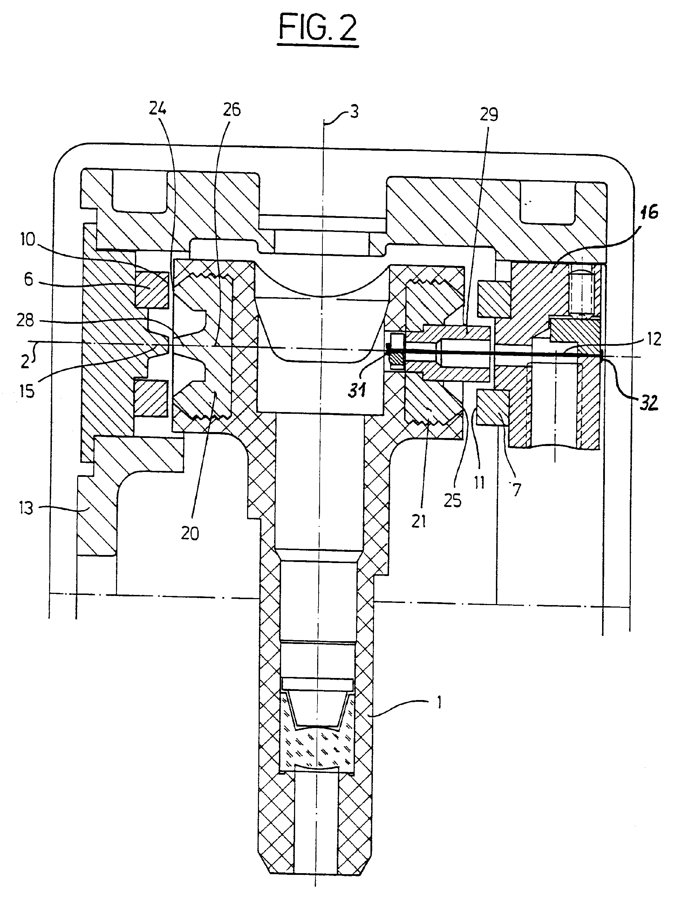

Figur 2 zeigt ein Präzisionsmeßpendel, bei dem als zusätzliche magnetische Zentrierung des Magnetschwebelagers auf der einen Seite des Pendels 1 Polzapfen und auf der anderen Seite des Pendels 1 ein Abstandshalter 29 vorgesehen ist, der keine magnetische Zentrierfunktion ausübt, sondern einen mechanischen Anschlag zur Zentrierung bildet.

Das Pendel 1 ist mit Kreiszylinderschalen 20, 21 verbunden, die aus Weicheisenkernen bestehen. Die Achsen der Weicheisenkerne 20, 21 liegen in der Pendeldrehachse 2. Die gehäuseseitigen Stirnflächen der Weicheisenkerne 20, 21 bilden Weicheisenpole, die den pendelseitigen Stirnflächen 10, 11 von Lagerringmagneten 6, 7 gegenüberliegen. Diese Lagerringmagnete 6, 7 sind mit Weicheisenkernen 15, 16 verbunden, die den Weicheisenkernen 22, 23 der Ausführungsform gemäß Figur 1 entsprechen.

An den Stirnflächen der Kreiszylinderschalen bzw. Weicheisenkerne 20, 21 sind kantenscharfe Ringe 24, 25 ausgebildet, die auf einer koaxial um die Pendeldrehachse 2 angeordneten Zylinderfläche liegen.

Zur zusätzlichen Zentrierung erstreckt sich vom Boden 26 der Kreiszylinderschale 20 ein Polzapfen 28 koaxial zum Lagerringmagneten 6 bis zur Ebene des kantenscharfen Ringes 24 hin. Diesem liegt ein Zapfenabschnitt des Weicheisenkernes 15 des Ringmagneten 6 gegenüber.

Der zusätzlichen magnetischen Zentrierung durch den Polzapfen 28 stehen auf der anderen Seite des Pendels 1 ein Abstandshalter 29 gegenüber, der keine magnetische Zentrierfunktion aufweist, sondern einen mechanischen Anschlag bildet. Dieser Abstandshalter 29 ist in die Kreiszylinderschale 21 eingesetzt und erstreckt sich in Richtung auf die pendelseitige Stirnfläche des Weicheisenkernes 16, der auf dieser Seite des Pendels 1 mit dem Gehäuse 13 verbunden ist.

Das ebenfalls auf dieser Seite des Pendels 1 angeordnete Spannband 12 ist zwischen einer pendelseitigen Klemmvorrichtung 31, die mit dem Abstandshalter 29 verbunden ist, und einer gehäuseseitigen Klemmvorrichtung 32 eingespannt. Um bei diesem Ausführungsbeispiel das Spannband 12 zu spannen, ist der Polabstand zwischen der Kreiszylinderschale 21 und dem Lagerringmagneten größer als der Polabstand zwischen der Kreiszylinderschale 20 und dem Lagerringmagneten 6 auf der anderen Seite des Pendels 1.

Die Reihenfolge der vorstehend beschriebenen Ausführungsbeispiele der Erfindung beinhaltet keine Wertigkeit dieser Ausführungsbeispiele. Das in Figur 2 dargestellte Ausführungsbeispiel wird aufgrund seiner einfacheren Bauform sowie durch die Möglichkeit einer zusätzlichen magnetischen Zentrierung durch einen Polzapfen auf der einen Seite des Pendels und einen mechanischen Anschlag zur Zentrierung auf der anderen Seite des Pendels ein größeres Anwendungsspektrum finden als die Ausführungsform gemäß Figur 1.

## Patentansprüche

1. Pendellager für ein in einem Gehäuse (13) gelagertes Präzisionsmeßpendel (1) mit zwei am Gehäuse (13) angeordneten Lagerringmagneten (6, 7), zwischen deren einander zugewandten parallelen Stirnflächen sich die Pendelachse (2) erstreckt, die an ihren Enden mit den Ringmagneten (6, 7) zusammenwirkende Magnetelemente (4, 5, 20, 21) trägt,
**dadurch gekennzeichnet,**
daß die Magnetelemente als magnetische oder den Magnetfluß leitende Elemente (4, 5, 20, 21) ausgebildet sind, und daß zur sowohl axialen als auch radialen Fixierung der Pendelachse (2) die Stirnflächenpole (8, 9, 24, 25) der Elemente (4, 5, 20, 21) den pendelseitigen Stirnflächen (10, 11) der Ringmagnete (6, 7) mit axialem Abstand gegenüberliegen, wobei jeweils ein Lagerringmagnet (6, 7) und das ihm gegenüberliegende Element (4, 5, 20, 21) als Magnetschwebelager derart zusammenwirken, daß sich in Richtung der Pendeldrehachse (2) erstreckende, um diese rotationssymmetrische, von gleichnamigen oder ungleichnamigen Polen erzeugte und sich radial zur Pendeldrehachse (2) erstreckende, um diese radialsymmetrische, von ungleichnamigen Polen erzeugte Magnetfelder ausbilden.

2. Pendellager nach Anspruch 1, **dadurch gekennzeichnet,** daß die Lagerringmagneten (6, 7) mit einem Weicheisenkern (22, 23; 15, 16) verbunden sind.

3. Pendellager nach Anspruch 1 oder 2, **dadurch gekennzeichnet,** daß der Freiheitsgrad des Pendellagers in Richtung der Pendeldrehachse (2) mechanisch begrenzt ist.

4. Pendellager nach einem der vorrangehenden Ansprüche 1 bis 3, **dadurch gekennzeichnet**, daß zwischen dem Pendel (1) und dem Gehäuse (13) in der Pendeldrehachse (2) ein Spannband (12) angeordnet ist.

5. Pendellager nach Anspruch 4, **dadurch gekennzeichnet**, daß die Magnetschwebelager (4 bis 7; 6, 7, 20, 21) magnetisch in axialer Richtung so einstellbar sind, daß auf das Spannband (12) eine Zugkraft ausgeübt wird.

6. Pendellager nach einem der vorangehenden Ansprüche, **dadurch gekennzeichnet**, daß das Magnetschwebelager zu beiden Seiten des Pendels (1) angeordnete Weicheisen-Bauelemente mit einer kreiszylindrischen-koaxialen Polkonfiguration aufweisen, deren Stirnflächenpole den pendelseitigen Stirnflächen (10, 11) der Ringmagnete (6, 7) mit Abstand gegenüberliegen.

7. Pendellager nach Anspruch 6, **dadurch gekennzeichnet**, daß die Weicheisen-Bauelemente koaxial in der Pendeldrehachse (2) angeordnete Kreiszylinderschalen (20, 21) sind, an deren Stirnflächen den pendelseitigen Stirnflächen (10, 11) der Ringmagneten (6, 7) mit Abstand gegenüberliegende, zueinander koaxiale kantenscharfe Ringe (24, 25) ausgebildet sind.

8. Pendellager nach Anspruch 6 oder 7, **dadurch gekennzeichnet**, daß sich zumindest an einem Boden (26, 27) der Weicheisen-Bauelemente (20, 21) koaxiale Polzapfen (28) in Richtung auf gegenüberliegende, pendelseitige Polzapfen von Weicheisenkernen (15) erstrecken.

9. Pendellager nach Anspruch 6 oder 7, **dadurch gekennzeichnet**, daß in einer der beiden Kreiszylinderschalen (21) der Polzapfen aus einem in die Kreiszylinderschalen (21) eingesetzten Abstandhalter (29) für das Spannband (12) besteht, das zwischen einer pendelseitigen Klemmvorrichtung (31) und einer gehäuseseitigen Klemmvorrichtung (32) eingespannt ist.

10. Pendellager nach einem der vorangehenden Ansprüche 1 bis 5, **dadurch gekennzeichnet**, daß die magnetischen Bauelemente in der Pendeldrehachse (2) angeordnete Stabmagnete (4, 5) sind, deren Radien kleiner als die Ringinnenradien der Lagerringmagnete (6, 7) und deren gehäuseseitige Stirnflächen (8, 9) im axialen Abstand von den pendelseitigen Stirnflächen (10, 11) der Lagerringmagnete (6, 7) angeordnet sind, und daß die Polaritäten der pendelseitigen und gehäuseseitigen Stirnflächen (8, 9; 10, 11) der Stabmagnete (4, 5) und Lagerringmagnete (6, 7) gleich sind.

11. Pendellager nach Anspruch 10, **dadurch gekennzeichnet**, daß die Stabmagneten (4, 5) als Kreisscheiben ausgebildet sind.

12. Pendellager nach Anspruch 10 oder 11, **dadurch gekennzeichnet**, daß die Lagerring- und Stabmagnete (4, 5; 6, 7) Permanentmagnete sind.

13. Pendellager nach einem der vorangehenden Ansprüche 1 bis 12, **dadurch gekennzeichnet**, daß die Ringmagnete (6, 7) stationär im Gehäuse (13) des Präzisionsmeßpendels montiert sind.

14. Pendellager nach mindestens einem der vorangehenden Ansprüche 1 bis 13, für einen in einem Meßgehäuse eingebauten Präzisionsmeßpendel, **dadurch gekennzeichnet**, daß für das Pendel (1) im Gehäuse (13) Anschläge derart ausgebildet sind, daß in jeder beliebigen Lage das Pendel (1) im Gehäuse (13) in einem Winkel anstößt, der kleiner ist als 80 °.

## Claims

1. A self-aligning bearing for a precision pendulum meter (1) journalled in a casing (13) having two bearing ring magnets (6, 7) arranged on the casing between the facing parallel end faces of which the pendulum axis (2) extends, which at its ends carries magnetic elements (4, 5, 20, 21) working together with the ring magnets (6, 7),
**characterised in that**
the magnetic elements are designed as magnetic or magnetic flux conducting elements (4, 5, 20, 21), and that for both axial and radial fixation of the pendulum shaft (2) the end face poles (8, 9, 24, 25) of the elements (4, 5, 20, 21) lie opposite the end faces (10, 11) of the ring magnets (6, 7) on the pendulum side at an axial distance, wherein in each case a ring magnet of the bearing (6, 7) and the element there opposite (4, 5, 20, 21) work in unison as magnetic floating bearings such that magnetic fields form themselves, extending in the direction of the pendulum fulcrum axis/shaft, rotationally symmetrical around this (the said shaft), produced by similar or dissimilar poles, and extending radially in relation to the pendulum fulcrum axis/shaft, radially symmetrical around this (the said shaft), produced by dissimilar poles.

2. A self-aligning bearing according to claim 1, **characterised in that** the ring magnets (6, 7) of the bearing are connected to a soft iron core (22, 23; 15, 16).

3. A self-aligning bearing according to claim 1 or 2 **characterised in that** the degree of freedom of the self-aligning bearing in the direction of the pendulum fulcrum axis/shaft (2) is mechanically restricted.

4. A self-aligning bearing according to any of the previous claims 1 to 3, **characterised in that** between the pendulum (1) and the casing (13) in the pendulum fulcrum axis/shaft (2) is arranged a tensioning band (12).

5. A self-aligning bearing according to claim 4, **characterised in that** the magnetic floating bearings (4, to 7; 6, 7, 20, 21) are adjustable in axial direction such that a tensional force is exerted on the tensioning band (12).

6. A self-aligning bearing according to any of the previous claims, **characterised in that** the magnetic floating bearing have soft iron componenets with a cylindrical coaxial pole configuration arranged on both sides of the pendulum (1), the end face poles of which lie opposite the end faces (10, 11) of the ring magnets (6, 7) at a distance on the pendulum side.

7. A self-aligning bearing according to claim 6 **characterised in that** the soft iron components are cylindrical shells (20, 21) arranged coaxially in the pendulum fulcrum axis (2), on the end faces of which are formed sharp edged rings (24, 25) coaxial to one another, lying opposite at a distance to the end faces (10, 11) of the ring magnets (6, 7) on the pendulum side.

8. A self-aligning bearing according to claim 6 or 7, **characterised in that** pole lugs (28) at least coaxial to a base (26, 27) of the soft iron components (20, 21) extend in the direction towards opposite lying pole lugs on the pendulum side of the soft iron cores (15).

9. A self-aligning bearing according to claim 6 or 7 **characterised in that** in one of the two cylindrical shells (21) the pole lug comprises a spacer (29) inserted into the cylindrical shell (21) for the tensioning band (12), which is clamped between a clamping device (31) on the pendulum side and a clamping device (32) on the casing side.

10. A self-aligning bearing according to any of the previous claims 1 to 5, **characterised in that** the magnetic elements are bar magnets (4, 5) arranged in the pendulum fulcrum axis/shaft (2), the radii of which are arranged smaller than the internal radii of the rings of the ring magnets (6, 7) of the bearing and the end faces (8, 9) of which on the casing side are arranged at an axial distance from the end faces (10, 11) of the ring magnets (6, 7) of the bearing on the pendulum side, and that the polarities of the end faces (8, 9; 10, 11) on the pendulum side and the casing side of the bar magnets (4, 5) and ring magnets (6, 7) of the bearing are identical.

11. A self-aligning bearing according to claim 10, **characterised in that** the bar magnets (4, 5) are designed as circular discs.

12. A self-aligning bearing according to claim 10 or 11, **characterised in that** the bearing ring magnets and bar magnets (4, 5; 6, 7) are permanent magnets.

13. A self-aligning bearing according to any of the previous claims 1 to 12, **characterised in that** the ring magnets (6, 7) are fixed stationary in the casing (13) of the precision pendulum meter.

14. A self-aligning bearing according to at least one of the previous claims 1 to 13 for a precision pendulum meter installed in a measuring instrument casing, **characterised in that** stops are formed for the pendulum (1) in the casing (13), such that the pendulum (1) in any random position assumes an angle in the casing (13) which is smaller than 80°.

## Revendications

1. Palier de pendule pour un pendule de mesure de précision (1) monté dans un boîtier (13) et comportant deux aimants toriques de support (6, 7), qui sont agencés sur le boîtier (13), l'axe de pendule (2) qui porte à ses extrémités des éléments magnétiques (4, 5, 20, 21) qui coopèrent avec les aimants toriques (6, 7) s'étendant entre les surfaces frontales parallèles et tournées l'une vers l'autre du boîtier, caractérisé en ce que les éléments magnétiques sont réalisés sous la forme d'éléments (4, 5, 20, 21) magnétiques ou conduisant le flux magnétique et en ce que, pour la fixation tant axiale qu'également radiale de l'axe de pendule (2), les pôles de surfaces frontales (8, 9, 24, 25) des éléments (4, 5, 20, 21) sont situés, à une distance axiale, en vis-à-vis des surfaces frontales (10, 11), du côté du pendule, des aimants toriques (6, 7), chaque fois un aimant torique de support (6, 7) et l'élément (4, 5, 20, 21) qui est situé en vis-à-vis de celui-ci, coopérant à la manière d'un palier à suspension magnétique de manière que soient réalisés des champs magnétiques qui s'étendent dans la direction de l'axe de rotation (2) du pendule, qui sont symétriques en rotation autour de celui-ci, qui sont produits par des pôles de mêmes signes ou de signes contraires et des champs magnétiques qui s'étendent radialement par rapport à l'axe de rotation (2) du pendule, qui sont radialement symétriques autour de celui-ci et qui sont produits par des pôles de signes contraires.

2. Palier de pendule suivant la revendication 1, caractérisé en ce que les éléments de support toriques (6, 7) sont reliés à un noyau de fer doux (22, 23 ; 15, 16).

3. Palier de pendule suivant la revendication 1 ou 2, caractérisé en ce que le degré de liberté du palier de pendule est limité mécaniquement dans la direction de l'axe de rotation (2) du pendule.

4. Palier de pendule suivant l'une des revendications précédentes 1 à 3, caractérisé en ce qu'une bande de torsion (12) est agencée entre le pendule (1) et le boîtier (13), dans l'axe de rotation (2) du pendule.

5. Palier de pendule suivant la revendication 4, caractérisé en ce que les paliers de suspension magnétique (4 à 7 ; 6, 7, 20, 21) sont réglés magnétiquement dans la direction axiale de façon qu'une force de traction soit exercée sur la bande de torsion (12).

6. Palier de pendule suivant l'une quelconque des revendications précédentes, caractérisé en ce que les paliers de suspension magnétique présentent des éléments constitutifs en acier doux agencés des deux côtés du pendule (1) et présentant une configuration de pôle cylindrique et coaxiale dont les pôles de surface frontale sont situés à distance en vis-à-vis des surfaces frontales (10, 11), du côté du pendule, des aimants toriques (6, 7).

7. Palier de pendule suivant la revendication 6, caractérisé en ce que les éléments constitutifs en acier doux sont des coquilles cylindriques (20, 21) qui sont agencées coaxialement dans l'axe de rotation du pendule (2) et sur les surfaces frontales desquelles sont réalisées des bagues (24, 25) coaxiales l'une par rapport à l'autre, à arêtes vives et situées à distance en vis-à-vis des surfaces frontales (10, 11), du côté du pendule, des aimants toriques (6, 7).

8. Palier de pendule suivant la revendication 6 ou 7, caractérisé en ce que des tétons polaires (28) coaxiaux s'étendent à partir de noyaux en acier doux (15), sur au moins un fond (26, 27) des éléments constitutifs en acier doux (20, 21), dans la direction de tétons polaires, situés du côté du pendule et opposés l'un à l'autre.

9. Palier de pendule suivant la revendication 6 ou 7, caractérisé en ce que, dans une des deux coquilles cylindriques (21), le téton polaire est constitué par une pièce d'écartement (29) insérée dans les coquilles cylindriques (21) et destinée à la bande de torsion (12) qui est tendue entre un dispositif de serrage (31) du côté du pendule et un dispositif de serrage (32) du côté du boîtier.

10. Palier de pendule suivant l'une des revendications précédentes 1 à 5, caractérisé en ce que les éléments constitutifs magnétiques sont des barreaux magnétiques (4, 5) qui sont agencés dans l'axe de rotation du pendule (2) et dont les rayons sont plus petits que les rayons internes des aimants toriques de support (6, 7) et dont les surfaces frontales (8, 9) du côté du boîtier sont agencées à distance axiale des surfaces frontales (10, 11), du côté du pendule, des aimants toriques de support (6, 7), et en ce que les polarités des surfaces frontales (8, 9 ; 10, 11), du côté du pendule et du côté du boîtier, des barreaux magnétiques (4, 5) et des aimants toriques de support (6, 7) sont les mêmes.

11. Palier de pendule suivant la revendication 10, caractérisé en ce que les barreaux magnétiques (4, 5) sont réalisés sous la forme de disques circulaires.

12. Palier de pendule suivant la revendication 10 ou 11, caractérisé en ce que les aimants toriques de support et les barreaux magnétiques (4, 5 ; 6, 7) sont des aimants permanents.

13. Palier de pendule suivant l'une des revendications précédentes 1 à 12, caractérisé en ce que les aimants toriques (6, 7) sont montés de façon fixe dans le boîtier (13) du pendule de mesure de précision.

14. Palier de pendule suivant au moins l'une des revendications précédentes 1 à 13, pour un pendule de mesure de précision monté dans un boîtier de mesure, caractérisé en ce que des butées sont réalisées dans le boîtier (13) pour le pendule (1) de façon que, dans chaque position quelconque, le pendule (1), dans le boîtier (13), bute pour un angle qui est plus petit que 80°.
